# EUROPEAN PATENT SPECIFICATION

(11) **EP 2 418 914 B1**
(45) Date of publication and mention of the grant of the patent: **03.07.2013**
(21) Application number: 11008936.4
(22) Date of filing: 26.10.2007
(51) Int. Cl.: H04W 24/10

(54) **Mobile terminal, network entity and method related thereto**
Mobiles Endgerät, Netzwerkentität und zugehöriges Verfahren
Terminal mobile, entité de réseau et procédé correspondant

(43) Date of publication of application: 15.02.2012
(62) Divisional of application: 07817160.0
(73) Proprietor: Huawei Technologies Co. Ltd., Longgang District Shenzhen Guangdong 518129 (CN)
(72) Inventor: Johansson, Johan, 164 Kista (SE); Sandberg, David, 164 Kista (SE); Olofsson, Henrik, 164 Kista (SE)
(74) Representative: Pfenning, Meinig & Partner GbR

(56) References cited:
- US-A1- 2003 207 687
- NEC ET AL: "UE assistance for self-optimizing of network", 3GPP DRAFT; R2-072432, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135267,
- T-MOBILE ET AL: "SON use cases for eNB measurements", 3GPP DRAFT; R2-072725, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135510,

## Description

### Field of the Invention

The present invention relates to the field of telecommunications; and more particularly to a mobile terminal for at least one cellular radio network having handover functionality, said mobile terminal including a report function that is adapted to send, in case of a failure event in regard of a communication between said mobile terminal and a radio base station belonging to said at least one cellular radio network, a report containing at least information on said failure event to said at least one cellular radio network. The present invention also relates to a Network entity for at least one cellular radio network and a Method of information management in at least one cellular radio network.

### Background of the Invention

Self-organising networks (SON) are considered as enablers of cheaper deployment of mobile radio networks and in the case of new radio network technologies enablers of a better acceptance of those technologies. The desired outcome in the end is of course the possibility of better sales of such new network technologies.

Self-organizing networks is a general term denoting functions of automatic planning, configuration, optimization, maintenance, outage compensation, etc.

The topic of this application is in the SON area of automatic optimization of Radio Access.

Radio Network performance is statistical in its nature. A user equipment (UE), also known as a mobile terminal, travelling from one cell to another cell using different paths could experience completely different radio conditions. One UE could experience that the cells overlap much and create significant cross-interference and another UE could experience a coverage hole between the cells. A network is never planned for 100 % coverage, which is impossible, but something less, e.g. in 95% of the cell a bitrate shall be achieved > a planned cell edge bitrate. Similarly, all performance requirements on a radio access network are stated in statistical terms.

Network performance is usually observed by regularly collecting statistics, e.g. every 15 min, from network elements, and do post processing to produce condensed performance indicators for the network. Statistics counters usually count events, or are incremented based on some achieved performance level during a certain time period etc. They are also referred to as pm counters or performance indicators.

Counting absolute number, e.g. of failure events is usually not a good measure of this failure being a problem in a Radio Network. Many "problems" normally occurs in a radio network, but at low rates, as the radio network is not perfect. In most cases, counted failure rates need to be related to the total traffic intensity in some way, and must be compared against a threshold which relates to an acceptable level of failures, in order to determine if this particular scenario shall be subject to optimization or not.

Thus, the optimization algorithms for Radio Access would use statistics counters as input, possibly pre-processed according to the above paragraph, to decide if optimization is needed, what to optimize (which configuration parameters to add/remove/change), in what way to change the parameters (increase, decrease), how much to change (stepsize).

The outcome of optimization decisions of the optimization algorithms could be new network configuration parameters to be applied, and/or also new measurement configurations, to get additional data and statistics from the Radio Access Network or UEs.

The optimization process is a control loop, which can converge quicker of slower, or maybe not at all, depending on the circumstances. It is assumed that the optimization algorithms work on time scales minutes - hours - weeks.

In this application, statistics counters are referred to as "pm counters". It is assumed that the network maintains such pm counters and that they can only be incremented, counting events according to various criteria. The characteristic of a pm counter is defined by its increment criteria.

In this application, the terms User equipment (UE) and Mobile terminal are used interchangeably.

In this application the term Handover sensitivity (HO sensitivity) is used to indicate a relative tendency or sensitivity or likelihood to do handover, i.e. the statistical likelihood that triggering criteria becomes fulfilled for triggers for starting measurements, doing measurement reports, doing handover decision.

In this document we also include Idle mode into this Concept, i.e. HO sensitivity = Idle mode cell reselection sensitivity, i.e. the statistical likelihood that triggering criteria becomes fulfilled for triggers for starting measurements and doing the cell reselection decision.

For intra-frequency cases, there is mainly the intra-freq mobility offset parameters that affect HO sensitivity, i.e. offsets that are applied when going from Cell A to Cell B can be set to favourize Cell B over all other cells, i.e. HO sensitivity is increased, offset is added to actual radio measurements for cell B when comparing which is the strongest cell, or alternatively offsets could be configured the opposite way, i.e. offsets are deduced from radio measurement for cell B, and it is defavourized, i.e. HO sensitivity is decreased.

There can also be other parameters than offsets that change the HO sensitivity, e.g. a hysteresis timer - a timer during which the UE is not allowed to go back to the cell it came from. If the timer is increased, the HO sensitivity is decreased. If timer is decreased, the HO sensitivity is increased.

For other cases, e.g. inter-frequency / Inter RAT, yet other parameters can affect the HO sensitivity, e.g. there could be a serving cell criteria to start UE measurements on other frequencies or other Radio access technologies (RATs), i.e. the UE would not start the measurements on the other freq/RAT until the serving cell quality/signal strength/received power drops below a certain threshold. If such a threshold is increased (more likely to trigger), the HO sensitivity is increased and if such a threshold is decreased (less likely to trigger), the HO sensitivity is decreased.

Other parameters, e.g. in future mobile systems, may of course also affect the HO sensitivity according to the intentions expressed in this chapter.

### Prior art

What shall be measured, reported and when are among the core decisions for the design of a self-organizing network. As prior art in regard of this application, the following documents could be mentioned.
3GPP R2-072432: This document proposes that for the purposes of a self-optimising network (SON), radio measurements on pilot channel shall be done and reported by a UE (User Equipment or mobile terminal) to the network. These reports are triggered by: i) failures, ii) if throughput is below a threshold, iii) by explicit triggering from SON-server, or iv) when a predefined geographical area has been entered by a UE. Further, the location of the measurement(s) can be pointed out by cell id, GPS and/or round trip time measurement. Triggering cause for the measurements and a timestamp for logging is also proposed to be included in the report.
3GPP R2-072725 proposes that radio base stations should generate a number of measurements, including: number of handovers triggered from a source to target cell, number of completed handovers from source to target cell and number of radio link failures (based on counting RRC connection requests with cause "radio link failure"). These measures aim at finding out where a UE "pops up" after experiencing a radio link failure. The outcome is used in order to tune: neighbouring relations relayed over RRC, relations configured in the radio base station for establishing connectivity with other base stations, and relations configured in the radio base station for interference coordination.
3GPP TS 36.300 V8.2.0 mentions that a UE could report the identity of the old serving cell when accessing a cell after RLF.

US patent application 2003/0207687 A1 discloses a method and apparatus for generating management data for drifting mobile radios. The application determines management information for both non-drifting and drifting mobile radios being serviced by a cell and/or by an RNC and reports such management information to a management system for further processing using existing formats, protocols, and procedures in both the traffic and management systems.

However, the experience of self-organising networks is a mixed one. It is not an easy task to devise a scheme for a self-organizing network that will take care of as many different problem scenarios as possible. Even though the above prior art may be useful in some scenarios, there is always room for improvements. The problem with building a self-organizing network is complex: it has to be decided what to measure, how to measure and when, and then what to report, while bearing in mind how the collected information should be used.

### Summary of the Invention

It is an object of the present invention to propose a solution for or a reduction of the problems of prior art. A main object is consequently to provide a mobile terminal that allows for a self-organizing network with improved properties.

According to the invention this is accomplished in a mobile terminal for at least one cellular radio network having handover functionality, said mobile terminal including a report function that is adapted to send, in case of a failure event in regard of a communication between said mobile terminal and a radio base station belonging to said at least one cellular radio network, a report containing at least information on said failure event to said at least one cellular radio network. The mobile terminal is distinguished in that said report function is adapted to send said report such that said report contains:
- a history of any failure event backwards in time until and including at least one successful event in regard of a communication between said mobile terminal and a radio base station belonging to said at least one cellular radio network, said at least one successful event having happened before said history of any failure event.

The main idea of the invention is to provide, in reports from a mobile terminal, a history of events experienced by that mobile terminal. This history includes any failure event backwards in time until and including at least one successful event. This is in contrast to the prior art, which merely reports failure events on a singular basis and not a potential whole chain of events as in the present invention. The main benefit is that, according to the present invention, a picture of what has really happened to a mobile terminal in terms of a chain of failures, e.g. access attempts, can be accomplished. In comparison, the prior art only provide diagnosing of a malfunctioning network from purely statistical evidence of collected single failures compiled into statistical measures. The present invention provides, as has been said, insight in how a chain of events really looked like. This enables a better understanding of the network and therefore entails more informed tuning decisions by e.g. a self-organizing network server.

According to the invention, the problems of prior art are also solved or reduced according to the invention by a network entity for at least one cellular radio network and a method of information management in at least one cellular radio network.

The dependent claims disclose further advantageous aspects of the invention.

### Brief Description of the Drawings

Embodiments exemplifying the invention will now be described, with reference of the appended drawings, on which:
Fig. 1 illustrates schematically a mobile terminal and a plurality of network entities of the invention, and
Fig. 2 illustrates a block diagram of an embodiment of a method of the invention.

### Detailed Description of the Invention

The main function that is addressed in this application is how to set, adjust and optimize mobility parameters automatically. According to state of the art in current wireless networks most such parameter setting is done manually, and entails a lot of work.

The cases that are in the focus of the current invention are the intra-frequency mobility cases. Intra frequency mobility occurs on the cell edge.

Some problems that can occur at active mode handover are, for example:
- HO (Handover) to a neighbour cell is triggered too early. UE (User Equipment) might experience access failure in the target cell, or RLF (Radio Link Failure) in target cell soon after HO, or UE might be again handed over from the target cell immediately after the HO.
- HO to a completely unsuitable neighbour cell is triggered, e.g. a distant cell "leaking in" into the current cell, e.g. on a bridge.
- HO to a neighbour cell is triggered too late. UE might experience RLF in source cell, before receiving HO command, or even before delivering measurement report.
- There might be a radio coverage hole. UE might experience RLF in source cell, possibly before delivering any measurement report, or the UE will deliver measurement reports that trigger Inter Frequency or inter RAT HO.

Corresponding problems can occur at cell reselection in Idle mode and it is assumed that same or similar mobility configuration is used in both Idle mode and Active mode, so that conclusions drawn from observations of Active Mode mobility can also be made applicable to Idle Mode mobility.

Prior art has proposed that for the purposes of SON, radio measurements on pilot channel shall be done and reported, triggered by failures, location pointed out by cell id, GPS and/or round trip time measurement. Triggering cause for the measurements and a timestamp for logging is also proposed.

There are multiple problems scenarios that are not handled with prior art:
- HO failure scenarios, where there is an access failure is in the target cell, i.e. the "HO triggered too early" and "HO to unsuitable cell" problem scenarios. In such a scenario, the UE would first be handed over to one cell, access in the one cell being non-successful. The UE would then re-establish, possibly in a third cell.
- Multiple quick handovers in problematic radio scenarios, ending in a failure case or maybe even in success. If two HOs that are successful happen very quickly one after the other, the network can detect this. If > 2 HO are involved or if the chain of events end with an RLF in the third cell, there is no way for the network to detect this, unless UE is traced (tracing the UE takes lots of resources and is possible only for very few selected UEs).

In these scenarios it is important to know in which cell the UE started the chain of events, because the start cell is the primary cell for optimization of mobility parameters. Most likely such events start by a successful HO to an unsuitable cell, where radio conditions very quickly deteriorates, maybe the hand-back is even be prevented by blacklisting, etc.

It is also important to know if the events happened at the same approximate location or not.

A key differentiating point: In order to know in which cell the problems begin, UE must be able to report the full history of mobility events, including successful events, not just that one particular failure that is the triggering cause for radio measurements.

A differentiating point: Using GPS, RTT Cell ID, etc. for location determination to correlate two different measurements as proposed in prior art is either too resource intensive to be supported in every UE (GPS) or too inaccurate (CellID / RTT). From mobility point of view absolute location determination is not needed, but instead relative location determination between mobility event is needed. The most efficient way to do this is, according to the proposal in this application, to do time correlation between the mobility events. Prior art proposes time stamps for "logging" of radio measurements. While other methods also fulfil these requirements, Time stamps could indeed provide the needed time correlation information, but they need to be applied to each of the various events, not only to radio measurement occasions. Also, it should be possible to scale the time-correlation time window according to the speed of the UE, in order to use this information in a sensible way.

Prior art proposes radio measurement values to be reported to the network to be the main base for making conclusions on the suitability of a certain cell.

This proposal is not good enough from many perspectives:
- A Radio measurement is measured and filtered for certain time that is quite short. For the purposes of configuring mobility parameters, a main purpose is to find and identify cell that are suitable in a complex radio environment, e.g. bridge / indoor-outdoor cells. In such environments a cell that is measured to be "strong" one moment can be found to have an unusable uplink due to long distance or can deteriorate very quickly, the next moment. In fact, these particular scenarios, where non-suitable cells can be measured to be "good" are the very reasons for needing a blacklist, or whitelist 1 kind of neighbour cell list. There are several kinds of neighbour cell lists:
- Blacklist - indicating other cells that shall not be used/considered when UE is in current certain cell.
- Whitelist 1 - indicating other cells that shall be used/considered when UE is in current certain cell.
- Whitelist 2 - indicating other cells that may be used/considered/preferred when UE is in current certain cell.
- IRAT/IFREQ Whitelist 0 - indicating carrier frequencies and associated Radio Access Technology.
- When optimizing the parameters controlling mobility behaviour, it is more accurate to observe the actual mobility behaviour of UEs, i.e. sequences of mobility events occurring, instead of only observing radio measurements, which gives static snapshots but may be a bad indicator of actual time-dynamic mobility behaviour.
- Radio measurements could in some detail scenarios provide useful input. However, having the UE report the actual measured values is a bit wasteful of transmission resources and complexity of post processing, considering that it is only needed to list those cells that fulfil a certain threshold criteria.

A key differentiating point: A better proof of suitability of a cell, from mobility configuration point of view, is the ability to maintain a connection to this cell. Thus, basing conclusions and pm counter increment criteria on successful re-establishments (successful = connection can be maintained for time >> measurement time), instead of only radio measurements, is a significantly better and more robust method than basing proof of suitability on only a radio measurement snapshot.

A key differentiating point: In order to clearly discriminate between coverage problems and mobility configuration problems, radio measurements are not sufficient, but the true mobility behaviour need also to be observed, i.e. the history of mobility events is needed.

A minor differentiating point: In order to utilize radio measurements efficiently, it is more efficient to do the first step of post processing in the UE, and only report cells that fulfil a certain criteria.

Prior art do not really propose how to know if the UE is on the cell-edge between cells or not, i.e. if this failure could have been avoided by modifying the mobility configuration or not.

A key differentiating point: UE being on the cell edge between cells might be possible to guess from radio measurements, but it is more accurate to know that the UE is on the mobility-cell-edge (where HO is triggered) by judging from mobility events occurring at the same approximate location (within the same time window).

Prior art do not consider at all how to map UE measurements into statistics parameters.

A key differentiating point: This proposal includes how to efficiently map UE measurements into usable statistics parameters, to be usable as input to SON decisions.

In summary, it is proposed that, at re-establishment, the UE shall report a history of mobility events in the last serving cells and other cells where access has been attempted.

This history is subsequently referred to as "the history of mobility events in last visited cells" or short "the history".

It is further proposed, later in this application, how to interpret this history of mobility events, how to map it into statistics pm counters, and how to interpret these counters to optimize handover (HO) sensitivity and neighbour cell list configurations.

A main intention is to clearly identify reestablishments and connection problems that occur on the cell edge between different cells, by making conclusions based on the history, by observing that time-correlated events occur in different cells. Mobility parameters control the UE behaviour as it moves between cells, and only the areas of the cell edges between cells are interesting. A connection failure and reestablishment can happen in the interior of a cell, as a UE goes out of coverage and comes back in, e.g. due to moving into a basement, but this case is not interesting from a mobility parameters point of view.

Another main intention is to observe and make conclusions from events that occur approximately at the same location, i.e. when a failure occur in one cell, to find possible suitable cells that are in coverage at this same location. If such suitable cells can be found, then the failure could have been avoided by better optimized mobility parameters. If no suitable cells at all can be detected at the approximate location of failure, the failure could not have been avoided by optimizing mobility parameters, but instead cell coverage should be optimized.

A main benefit of making possible to report mobility events occurring in multiple cells (>1) is that, regardless which cell the UE re-establishes to, it is possible and easy to detect UE behaviour patterns seen at "HO triggered too early" and "HO to unsuitable cell" problem scenarios and clearly identify the source cell where the problem originates from, for a) RLF in target cell immediately after HO, or b) access failure in the target cell. c) multiple access failures. Also, this kind of reporting can help identify non-suitable neighbours (too distant, or too temporary, with high failure intensity when used as mobility neighbours from certain other cell) and erroneously blacklisted neighbours.

The main benefit of time-correlation is that it can provide a sufficiently exact relative location indication (same place indication) and at the same time be implemented in a very simple way.

Thus, the invention refers in a general case to a UE or mobile terminal for at least one cellular radio network having handover functionality, said mobile terminal including a report function that is adapted to send, in case of a failure event in regard of a communication between said mobile terminal and a radio base station belonging to said at least one cellular radio network, a report containing at least information on said failure event to said at least one cellular radio network. The mobile terminal being distinguished by that said report function is adapted to send said report such that said report contains:
a history of any failure event backwards in time until and including at least one successful event in regard of a communication between said mobile terminal and a radio base station belonging to said at least one cellular radio network, said at least one successful event having happened before said history of any failure event.

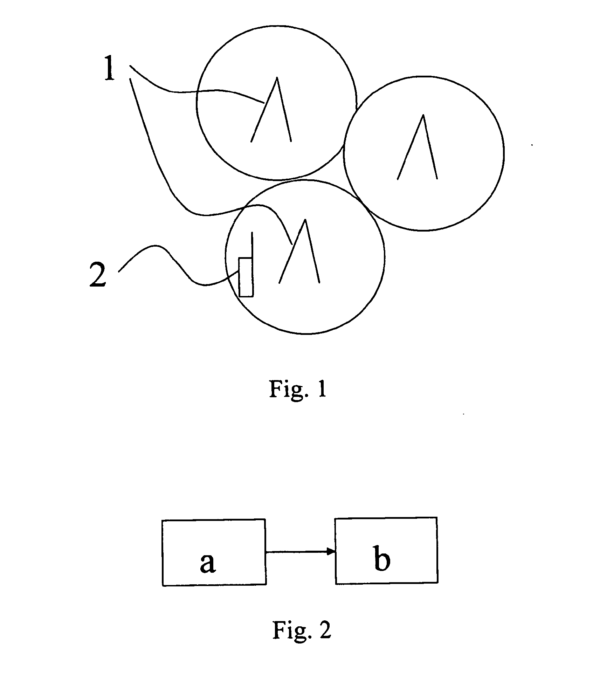

A schematic illustration of a mobile terminal 2 according to the invention is depicted in Figure 1.

As is apparent from the last paragraph, the mobile terminal according to the invention is intended for one or more cellular radio network with handover functionality. Examples of such networks are GSM, UMTS and even WIFI networks could in principle be contemplated if provided with applicable functionality for handling the handover. Future radio networks could of course be contemplated also.

The report function of the mobile terminal could be implemented in the mobile terminal in, for instance, a microprocessor by way of software. However, the report function may be implemented as the aggregate of more than one physical device. Further, it does not have to be a microprocessor, but any electrical device, having the necessary characteristics, such as FPGA-circuits, ASICs or event lumped electronic components could be used. Whenever the report function is required to send or receive a report, it does so by incorporation of the necessary hardware such as a radio transmitter/receiver.

As an extension, the mobile terminal could be provided with functionality such that the history could be related to a specific geographical area. That could be achieved by adapting said report function to send said report such that said report contains:
a history of any failure event and at least one successful event, having occurred within a first geographical area in which the mobile terminal has been present.

In this way, the history could be put in a geographical context, and thus can be used to troubleshoot a specific geographical area of the cellular radio network.

There are many possibilities to determine the first geographical area. For instance the report function of the mobile terminal could be adapted to determine said first geographical area as an area in which the mobile terminal has been present during a time window.

Using a time window is a simple way of limiting the history of events in the report to events having occurred within a geographical area. The geographical area will be the area in which the mobile terminal has travelled, if it is in motion, during the time window. A benefit is that positioning systems, which can be expensive and power consuming, such as GPS (Global Positioning System) is not needed with this approach.

Thus, it is proposed to have relative time-correlation between mobility events in the history and the corresponding radio measurements / lists or possible target cells. In most cases there is a need to correlate events to roughly one and the same geographical location to be interesting (to be able to make conclusions applicable to mobility optimization). In many cases the entries need to be correlated to the reestablishment location.

The main benefit of time-correlation is that it can provide a sufficiently exact relative location indication (same place indication) and at the same time be implemented in a very simple way.

Further, said report function could be adapted to scale said time window in accordance to speed of said mobile terminal. Thereby, the actual size of the geographical area could be made independent of speed of travel of said mobile terminal, in the case of using a time window to determine the first geographical area.

There are many ways for said report function to estimate said speed of said mobile terminal, for the purpose of the report. For instance, any of the following procedures could be used: Doppler measurements, rate of cell change, established by network, type of area.

Thus, it is further proposed that the time-window for relative time correlation can be scaled with the speed of the UE:
- where the speed of the UE could be estimated by the UE itself, based on L1 Doppler measurements, or rate of cell changes etc, and included in the UE report,
- alternatively it could be estimated by the network in the cell where UE re-establishes,
- alternatively it could be semi-permanently indicated according to the type of area that the Cell covers, i.e. highway cell vs. supermarket indoor cell, e.g. by explicitly providing cell-specific time-correlation timers by signalling to the UE, e.g. on the broadcast channel of a cell.

In this way, accurate same-location-determination based on time-correlation can be achieved for both high-speed UEs and low-speed UEs.
It is proposed that it shall be possible to limit the time window for which the UE stores and reports entries in the history, i.e. the UE do not need to report entries older than time X

In the simplest possible implementation, this could serve as the main time correlation mechanism. X can be set sufficiently short so it can be ensured that all the reported entries roughly correlate to the same location as the re-establishment location. This would represent the simplest and least dynamic way of time correlation.

In other cases, still a similar rule is needed, so UE can discard old entries based on an explicit rule, and thus save memory space.

It is further proposed that the time period X can be scaled according to the speed of the UE, according to above.

As an alternative, said report function could be adapted to determine said first geographical area by geographical position estimation. Such estimation could be performed by for instance GPS, as elaborated on above.

The failure event reported in a mobile terminal according to the invention, could for instance be one event from a group consisting of: Access Failure, Radio Link Failure.

It is proposed that for Access Failures, the UE can provide additional information for the failure event.

In particular it is proposed that an explicitly indicated reason for Access Failure can be:
- "high load / multiple collisions".

The meaning of this reason would be: collisions are detected or it is detected that there are no remaining resources to continue access procedure, underlying reason assumed to be high load. Other signs of high load could also be included. This reason could be used, when the network has responded to an access attempt and explicitly indicated high-load / backoff command in the response.
- "No response message at all observed".

The meaning of this reason would be: No response message at all is seen, not for any UE. For LTE, this could be an indication that something is wrong. The assumption for LTE is that for the access response message, a UE is addressed with a common address, used by all UEs awaiting a response to an access attempt done at a certain time.
- "Collision detected for non-contention resource".
- If none of the other explicit reasons apply, it is assumed that radio coverage is the main problem. Alternatively, "radio reasons" could be explicitly indicated.

It is proposed that at least one pm counter for a cell shall be incremented due to Access Failure, with reason "radio reasons" or due to any other specifically indicated reasons.

As to a successful event reported, it could for instance be any event from a group consisting of: said mobile terminal leaves a cell in a normal way after having been successfully connected to this cell, said mobile terminal leaves a cell in a normal way after having been successfully camped on this cell, said mobile terminal accesses a cell successfully for reestablishment, said mobile terminal having maintained a communication link to a cell successfully.

There are many possible additions that could be made to a report that is sent from a mobile terminal according to the invention. For instance, the report function could be adapted to provide, in said report, a list of possible target cells.

It is assumed, from proposals in prior art and in this document, that the UE could report radio measurements or list of possible target cells directly in the cell where he re-establishes, together with the history. This would be the simplest principle, and can handle all cases.

Preferably, the UE should not need to do additional specific radio measurements for the purposes of this document. It would be preferred if the UE could just store the mobility measurement(s) that are best correlated with a trigger to store measurements. However, some new requirements may be introduced.

It is assumed that the radio measurements to be used for the purpose of this document are based on the normal mobility measurements the UE otherwise would have to do anyway. In particular the measurement types may be Received Signal Strength Indicator (RSSI), Reference Signal Received Power (RSRP, CPICH RSCP, ...), Reference Signal Received Quality (RSRQ, CPICH Ec/Io, ...).

The report function could further be adapted to generate said list of possible target cells by applying a threshold value of a cell quality parameter, filtering out cells falling outside a range defined by said threshold value.

For generating the list of possible target cells, it is proposed that the UE can apply one or more threshold value(s) to filter out cells for which the measured entity is higher (or alternatively lower) than this threshold, this measurement to be saved and reported with the last visited cells list. This can be regarded to be a list of possible target cells.

The UE could then report cells that "can be properly received" only, which are the interesting ones. This way, post processing could be simplified, reporting of actual measurement value could be avoided, and the reported list could be condensed to a shorter one.

Such a threshold could be varied by said report function in accordance with present area of occupation of said mobile terminal.

It is proposed that the threshold value(s) to be applied can be different in different areas, and that it is configured dynamically in the UE.

The definition of "properly received" could be different in different areas as the network could have different planned cell edge bitrate in different areas. By comparing measurements towards a threshold different from what is required for "in coverage", the resulting pm counters can:
- provide stronger statistical evidence for certain problems;
- provide the possibility to do optimization towards planning parameters, e.g. planned cell edge bitrate, and not only towards "in coverage" / "out of coverage" problems.

The report function could also be adapted to provide said list of possible target cells in order of value of said cell quality parameter. Thus, it is further proposed that the list of possible target cells should be ordered in descending/ascending order with regard to measurement quantity. This way it is e.g. possible to do statistics processing on "best" cell, without incurring any additional measurement reporting overhead.

In order to limit the size of a report according to the invention, said report function could be adapted to report cell measurements on demand from said at least one cellular radio network.

Thus, it is proposed that the UE reports these measurements on demand from the network, e.g. in the RRC connection setup procedure the network could indicate if such reporting is desired. Furthermore UE should not need to do additional measurements directly after re-establishment unless indicated from the network. In this way non-needed measurement reporting could be avoided.

Alternatively, It is proposed that the cell controller (e.g. Node B) where the UE re-establishes can request the last mobility measurement report from the last serving cell controller (e.g. Node B) by inter cell controller signalling, (e.g. EUTRA X2 interface). [prior art: it has been proposed that the last mobility measurement report can be forwarded over X2 at handover preparation, but the problem is that at failure the UE may re-establish at another cell, which has not received this info].

In particular, relying on network reporting measurements, instead of letting UE report would mean that for ordinary mobility measurements, the UE cannot just report event measurement reports for mobility, e.g. "new strongest cell" event and its identity to source cell, but the UE would need to report more complete information, e.g. actual measurement values for all detected cells, or the full list of possible target cell. In order to make sure such more complete measurement reporting is used across a network where mobility SON is used, it is further proposed that the mode of measurement reporting can be configurable by O&M.

This way, the UE maybe omit the reporting of actual radio measurements / possible target cells list. The UE would just need to report the history.

This could be a way to get more measurement data, maybe for certain problematic areas, without imposing on the UE to store more measurement results.

Said report function could also be adapted to report, for a cell having reestablished communication with said mobile terminal, if that cell has been black listed earlier in said history within said time window. Thus, it is proposed that the UE can include also Cells, that are blacklisted in current cell or in a cell in the history, in the report of possible target cell(s) or measurement report. If such cells are included, it should be explicitly indicated that they are blacklisted, and in which cell they have been blacklisted.

Indication of cell where blacklisting has been done could be done in multiple ways: A) it can be determined by specifying and restricting UE behaviour in a specification, e.g. that the UE only considers the blacklist of the last previous cell in the history B) UE indicates explicitly which blacklist is considered. When the blacklisting could have been done in different cells in the history, the cell with the blacklist in question could be explicitly indicated.

In this way it is possible to initiate additional measurements for such blacklisted cells, and to trigger additional reporting to the SON server.

The UE might not be able to include blacklisted cells in ordinary radio measurements for mobility. In cases when the UE for efficiency cannot not measure blacklisted cells as a part of normal mobility measurements it is proposed that blacklisted cells (cells that are blacklisted in a previous cell) can be measured at first possible point in time after/during re-establishment. This could be initiated spontaneously by the UE, or by request from the network. The UE could remember which cells that were blacklisted in previous cells.

An alternative to the UE indicating cells are blacklisted, the controller of a Cell (Node B) can know which cells are blacklisted in neighbour cells, by configuration to make possible to order measurements of blacklisted cells as soon as a UE has reestablished. Neighbour cell blacklist information thus need to signalled either by RAN signalling (LTE: over X2) or by O&M signalling. Intentionally it should be possible to do such measurements within the time-correlation time window.

Erroneously Blacklisted cells can also be indicated, without performance penalty.

It is proposed that if a cell in which the UE successfully re-establishes is blacklisted in any cell of the history of mobility events in last visited cells, within the time correlation time window, this shall be particularly reported. In particular it shall be reported if the cell is blacklisted in the last serving cell.

In this way it is possible to initiate additional tracing and measurements for this UE. If the UE stays successfully connected to this cell for significant amount of time this is strong evidence that the cell is erroneously blacklisted (see also chapter on performance indicators).

Depending upon where the recipient of a report, according to the invention, is located, said report function could be adapted to forward, via a network node in said at least one cellular radio network, said report to another network node. In this way a report could be forwarded to a recipient that is associated with a network node other than the one the mobile terminal is presently communicating with.

In case the recipient is associated with a network node of another cellular radio network node, the report function could be adapted to forward, via a network node in said at least one cellular radio network, said report to another cellular radio network node.

### Network entity

The recipient of a report according to the invention may be any network entity for at least one cellular radio network having handover functionality, said network entity including a report function that is adapted to receive a report coming from a mobile terminal, in case of a failure event in regard of a communication between said mobile terminal and a radio base station belonging to said at least one cellular radio network, said report containing at least information on said failure event. The network entity is distinguished in that said report function is adapted to receive said report wherein said report is of the type containing:
- a history of any failure event up until and including at least one successful event in regard of a communication between said mobile terminal and a radio base station belonging to said at least one cellular radio network.

A schematic illustration of a network entity according to the invention is depicted in Figure 1.

It should be pointed out that the report function of the network entity is not quite the same as of the mobile terminal. Rather, the report function of the network entity is the reciprocal of the report function of the mobile terminal in so far as that the report function of the network entity is adapted to receive reports coming from the mobile terminal. As to the physical implementation of the report function of the network entity, it could be similar to the one of the mobile terminal, see the corresponding paragraph above.

As an extension, the network entity could be provided with functionality such that the history could be related to a specific geographical area. That could be achieved by adapting said report function to receive said report wherein said report contains:
- a history of any failure event and at least one successful event, having occurred within a first geographical area in which the mobile terminal has been present. As another extension, the network entity could be adapted to request additional history information, beyond what is reported by the mobile terminal, from another Network Entity that is identified from the history reported by the Mobile terminal, wherein the additional event information could contain:
- a further history of failure events and successful events, having occurred within a geographical area in which the mobile terminal has been present;
- further radio measurements reported by the mobile terminal in another cell, having occurred within said geographical area.

A benefit of this approach is to increase the ability to handle long chains of events, and increase the amount of radio measurement data to be used for statistical processing (to make more detailed conclusions) without burdening the mobile terminal to have to report same events, and same measurements in multiple cells.

The report function of the network entity could be adapted to estimate from said report at least one Performance Measurement Counter indicating a measure of performance of said at least one cellular radio network.

It is proposed that pm counters can be incremented based on particular sequences of events occurring in multiple cells, happening at the same approximate location or co-inciding within a time-correlation time-window.
- The history of mobility events in last visited cells and a current reestablishment event is intended to be used to provide input parameters to be able to maintain/increment these pm counters.
- The intention of such pm counters is that they shall be significant in providing statistical evidence of certain problematic scenarios, where problem scenarios dependent on mobility parameters such as offsets can be discriminated from problem scenarios mainly due to "real" coverage holes. Also, problem scenarios that can be solved by increasing HO sensitivity (HO should be done earlier) shall be discriminated from problem scenarios that can be solved by decreasing HO sensitivity, or even completely blacklisting certain cells (blacklisting: HO sensitivity = Zero).
- SON algorithms would use such pm counters as input and make decisions or proposals for how to update configuration parameters to operate the network in a more optimal way.

Such a at least one Performance Measurement Counter could for instance be a measure of number of times said mobile terminal has experienced an access failure due to any reason from a group of reasons consisting of: high load, no response observed for any Mobile, collision detected for non-contention resource, other reason. Thus, it is proposed that at least one pm counter for a cell shall be incremented due to Access Failure, with reason "no response message at all received".

It is proposed that at least one pm counter for a cell shall be incremented due to Access Failure, with reason "collision detected for non-contention resource". It is proposed that at least one pm counter for a cell shall be incremented due to Access Failure, with reason "high load / multiple collisions".

In particular, it is proposed that at least one pm counter for a cell shall be incremented due to Access Failure, with reason "radio reasons", which may be explicitly indicated or the collection of other non-known communication problem reasons.

A benefit of indicating the specific reasons "high load / multiple collisions" and "Collision detected for non-contention resource." is that we avoid doing erroneous adjustments of mobility or coverage configuration, when the reason for the failure is not related to the mobility or coverage configuration.

A benefit of indicating: "no response message at all observed" is to support troubleshooting. This exact behaviour could be expected if the UE has wrong access information regarding the Access Radio Resources and/or the Access Response Addressing or Radio Resources, which could be e.g. due to accessing the wrong cell, e.g. if we have a cell ID collision.

A benefit of indicating ERROR: Collision detected for non-contention resource could be that mismatches in configurations between target and source cells could be detected. Also, abnormally delayed handovers could possibly be detected.

The benefit of indicating: "radio reasons" is that UE doing access to a cell with bad radio conditions could be detected. This would be an indication that hand-over to this cell was triggered too early or that this cell might be an altogether unsuitable target cell for handover from the source cell.

All of the above indications are "soft" problem indicators, which need statistical evidence, thus the proposed pm counters to support statistical analysis, where evidence of problems is found when pm counter is compared to a threshold. Possibly pm counter could also first be related to the total access intensity to form a relative ratio.

In this document, if not otherwise stated, when mentioning "access failure", the meaning is "access failure" with reason=radio reasons.

Another possibility is that said at least one Performance Measurement Counter could be a counting of number of times said mobile terminal has experienced a Radio Link Failure in one cell with a subsequent reestablishment in another cell.

Thus, it is proposed that at least one pm counter shall be incremented based on the criteria of RLF occurring in one cell, and successful re-establishment being done in another cell, at the same approximate location or within the time-correlation time-window from the RLF event, the pm Counter being applicable to the pair of said one cell and said another cell.

Based on this pm counter it could be concluded if the UE could have been handed over to the Cell where the re-establishment is done or not. Assuming that UE after RLF would search for its strongest cell and try to re-establish to it, this counter would also give indication if there is any cell at all that the UE could have been handed over to at the RLF, i.e. if a successful HO could have been performed, should it have been triggered earlier. This is applicable to both intra frequency, inter frequency and inter RAT (radio access technology) mobility scenarios.

By observing a high value of above said at least one pm counter, possibly relating it to the total number of HO between above said pair of cells or to the total number of RLF or to the total no of RLF where reestablishment is done in said another cell, and comparing towards a threshold value, it is possible/easy to find statistical evidence of the "HO triggered too late" problem scenario, and thus make conclusion that the mobility offset parameters between said pair of cells should be changed to increase the HO sensitivity, to trigger HO earlier.

If said another cell is blacklisted in said one cell, a high value of above said pm counter, could be interpreted as evidence that the blacklisting is wrong.

Alternatively or Complementary, It is proposed that at least one pm counter shall be incremented based on the criteria of RLF occurring in one cell, and at least one other cell being measured (signal strength, quality etc) by the UE to be above a certain threshold, measurement being done at the same approximate location or within the time-correlation time-window relative to the RLF (before or after), the pm Counter being applicable to the pair of said one cell and said another cell.

In addition to observations/benefits of previous paragraph, Using a threshold set higher than what is required for "in Coverage", e.g. a threshold that would map to planned cell edge bitrate, and doing statistical analysis similar to above, even stronger statistical evidence of the "HO triggered too late" scenario could be found, even more clearly discriminating this problem from the "real coverage hole" scenario, which would make possible to make stepsize in the increase of HO sensitivity larger, to make possible faster convergence of SON algorithms.

RLF → RE-Establishment (successful stay)

It is proposed that at least one pm counter shall be incremented based on the criteria of RLF occurring in one cell, and successful re-establishment being done in another cell, at the same approximate location or within the time-correlation time-window from the RLF event, and the UE staying successfully connected to the another cell for a period of time, the pm Counter being applicable to the pair of said one cell and said another cell.

Alternatively, the opposite of the last criteria could be counted, i.e. that at least one pm counter shall be incremented based on the criteria of RLF occurring in one cell, and successful re-establishment being done in another cell, at the same approximate location or within the time-correlation time-window from the RLF event, and the UE NOT staying successfully connected to the another cell for a period of time (i.e. within this time, a 2nd handover or a RLF etc occurs), the pm Counter being applicable to the pair of said one cell and said another cell.

If said another cell is blacklisted in said one cell, a high value in the first pm counter or alternatively a low value in the latter one, provides is evidence that the blacklisting might be wrong.

If said another cell is blacklisted in said one cell, a low value in the first pm counter or alternatively a high value in the latter one, provides is evidence that the blacklisting is correct.

Possibly the incrementing of the any of the two above pm counters is done only if the above said another cell is blacklisted, i.e. based on the UE indicating that the reestablishment cell to be blacklisted in a cell in the history, or based on the Cell Controller (Node B) having configuration information indicating in which cells the above said one cell is blacklisted.

Proposal: Analogously, this "successful stay" increment criteria, or the "nosuccessful stay" opposite criteria could be added as an addition to any of the reestablishment based pm-counters to form new pm-counters where high/low counts provide more substantial evidence of a cell being suitable as a target cell for mobility from a source cell.

HO → AF → Re-establishment

It is proposed that at least one pm counter shall be incremented based on Access Failure in a target cell at HO, after a HO triggered in a source cell, and reestablishment then being successfully done in any cell, at the same approximate location or within the time-correlation time-window from the AF event, the pm Counter being applicable to the pair of said source cell and said target cell.

It could be concluded that the UE should not have been handed over to the Cell of the access failure, as there obviously is another cell (the re-establish one) that works better.

By observing a high value of above said at least one pm counter, possibly relating it to the total number of HO between above said pair of cells, and comparing towards a threshold value, this can be interpreted as evidence of the "HO triggered too early" problem scenario and thus make conclusion that the mobility parameters between said pair of cells should be changed to decrease the HO sensitivity, to trigger HO to the above said target cell later.

Conclusion could also be made that the target cell might be altogether unsuitable and is a candidate for blacklisting in the source cell, e.g. target Cell could be blacklisted if the HO success rate remains similarly low even after adjusting mobility offset parameters.

Alternatively or Complementary, It is proposed that at least one pm counter shall be incremented based on Access Failure in a target cell, after a HO triggered in a source cell, and a cell other that the target cell is measured to be above a certain threshold value (signal strength, quality) at the same approximate location or within the time-correlation time-window related to the AF event, the pm Counter being applicable to the pair of said source cell and said target cell

In addition to observations/benefits of previous paragraph, Using a threshold set higher than what is required for in Coverage, e.g. a threshold that would map to planned cell edge bitrate, and doing statistical analysis similar to above, even stronger statistical evidence of the "HO triggered too early" scenario and/or "target cell not suitable" could be found, even more clearly discriminating this problem from the "real coverage hole" scenario, which would make possible to make stepsize in the decrease of HO sensitivity larger, to make possible faster convergence of SON algorithms. A decision to blacklist this cell could be taken faster.

It is proposed that there shall be at least one pm counter, that is incremented at successful reestablishment in a certain cell, when the successful reestablishment follows a Failed Handover from a source cell to a target cell within the time-correlation time window from the access failure in the target cell, where this pm counter is applicable to the pair of said certain cell and said source cell.

A high count in the above pm counter could mean that said certain cell is a suitable HO candidate cell for UEs in said source cell. A conclusion could be that HO sensitivity from source cell to target cell should be increased.

If above said cell is blacklisted in said source cell, a high count in this counter is strong evidence that the blacklisting is wrong.

HO → HO → ...→ AF → Reestablishment

It is proposed that at least one pm counter shall be incremented based on Access Failure in a cell at HO, after multiple HO has been triggered within the time-correlation time window, starting with a first HO in a first source cell to a first target cell, and re-establishment then being successfully done in any cell, at the same approximate location or within the time-correlation time-window from the AF event, the pm Counter being applicable to the pair of said first source cell and said first target cell.

This scenario might look unlikely at first view, but considering that SON algorithms are used to optimize mobility, this could occur, e.g. in the scenario where there is a problematic region that has been optimized to 50%, e.g. resulting in blacklisting of distant cells from first target cell. If corresponding blacklisting the other way, from first source cell to first target cell, has not yet been done, it is quite possible that the UE will be handed into a distant cell (the first target cell), and then locally handed over to another distant cells (due to blacklisting), although

It could be concluded that the UE should not have been handed over to the Cell of the access failure, as there obviously is another cell (the re-establish one) that works better. Judging from the fast sequence of HO, none of the intermediate cells seems really suitable, and it is assumed that the root cause is that the first HO in the chain of fast HOs.

By observing a high value of above said at least one pm counter, possibly relating it to the total number of HO between above said pair of cells, and comparing towards a threshold value, this can be interpreted as evidence of the "HO triggered to unsuitable cell" problem scenario and thus make conclusion that the mobility parameters between said pair of cells should be changed to decrease the HO sensitivity, to trigger HO to the above said first target cell later, or not at all. Also complete blacklisting could be considered.

The network entity according to the invention could be implemented in different places in the network depending on choice of implementation. For instance, said network entity could be implemented in any apparatus from the group consisting of: radio base transceiver station, operations and management server of the at least one cellular radio network.

### Method of the invention

The present invention also includes a method. The method is in a general form a method of information management in at least one cellular radio network, said at least one cellular radio network having handover functionality, including the steps:
a) sending from a mobile terminal for said at least one cellular radio network, in case of a failure event in regard of a communication between said mobile terminal and a radio base station belonging to said at least one cellular radio network, a report containing at least information on said failure event to said at least one cellular radio network,
b) receiving in a network entity, for said at least one cellular radio network having handover functionality, said report coming from said mobile terminal. The method is distinguished by that in step a): sending from a mobile terminal, said report such that said report contains a history of any failure event up until and including at least one successful event in regard of a communication between said mobile terminal and a radio base station belonging to said at least one cellular radio network.
   A block diagram of an embodiment of the method according to the invention is depicted in Figure 1, pointing out steps a and b.
   As an extension, the method of information management according to the invention could include in step a): sending said report such that said report contains a history of any failure event and any successful event, having occurred within a first area of geographical residence of said mobile terminal.
   This document proposes some pm counter characteristics and increment criteria that are keys to be able to make proper conclusions.
   Pm counters can also be calculated from other pm counters, some of these are referred to as KPI (Key performance indicators), and others can be tailored for usage in certain algorithms.
   In this document, UE data reporting and associated pm counter increment criteria for mobility configuration optimization is proposed, i.e. UEs do not report pm counters directly, but the network maintains these pm counters based on reporting from several/many UE.
   The location of SON algorithms may be in a centralized entity, e.g. the O&M support system, or it can be distributed in the network. It is assumed that only one SON entity implements the optimization of mobility parameters for one cell.
   The pm counters and their use in the method of the invention could of course be numerous. What follows are some examples.
   Method of information management according to the invention could further include:
c) the network entity optionally requesting additional information from another network entity, said additional information coming from earlier reports from said mobile terminal and earlier registered events relating to said mobile terminal,
d) maintaining at least one pm counter that is incremented based on criteria derived from the information received in steps b and optionally c.

Method of information management according to the invention could further include: said step d) involves that at least one pm counter is incremented based on criteria of a Radio Link Failure occurring in one cell, and successful re-establishment being done in another cell, within the same geographical area, the pm Counter being applicable to the pair of said one cell and said another cell.

Method of information management according the invention could further include: the incrementing of the pm counter is done only if said another cell is blacklisted in a cell, mentioned in the history.

Method of information management according to the invention could further include: said step d) involves that at least one pm counter is incremented based on Access Failure in a target cell at Handover, after a Handover triggered in a source cell, and re-establishment then being successfully done in any cell, within one geographical area, the pm Counter being applicable to the pair of said source cell and said target cell.

Method of information management according to claim the invention could further include: said step d) involves that at least one pm counter is incremented based on Access Failure in a target cell, after a Handover triggered in a source cell, and a cell other that the target cell is measured to be above a certain threshold value of a parameter, within one geographical area, the pm Counter being applicable to the pair of said source cell and said target cell. Such a parameter could for instance be: signal strength, quality.

Method of information management according to the invention could further include: said step d) involves that at least one pm counter is incremented at successful reestablishment in a certain cell, when the successful reestablishment follows a Failed Handover from a source cell to a target cell within one geographical area, where this pm counter is applicable to the pair of said certain cell and said source cell.

Method of information management according to the invention could further include: said step d) involves that at least one pm counter is incremented based on Access Failure in a cell at Handover, after multiple Handovers has been triggered, starting with a first Handover in a first source cell to a first target cell, and reestablishment then being successfully done in any cell, within the same geographical area, the pm Counter being applicable to the pair of said first source cell and said first target cell.

Method of information management according to the invention could further include: for pm counters relating to a first cell and a second cell, where additional criteria that Mobile Terminal has been successfully connected to said first cell for a certain period of time, must be fulfilled in order to increment the pm Counter.

Method of information management according to the invention could further include: for pm counters relating to a first cell and a second cell, where additional criteria that Mobile Terminal has been successfully connected to said second cell for a certain period of time, must be fulfilled in order to increment the pm Counter.

Method of information management according to the invention could further include: for pm counters relating to a first cell and a second cell, where additional criteria that Mobile Terminal was not successfully connected to said second cell for a certain period of time, must be fulfilled in order to increment the pm Counter.

### History of mobility events in last visited cells, examples

### EXAMPLE 1

History of mobility events in last visited cells, including radio measurements provided in threshold style could look like this:
<CellID:current><event:access><timestamp: 12.35.42.58>
<CellID:id1><event:RLF><timestamp: 12.35.41.88>
<CellID:id2><event:Src cell leave><timestamp:12.35.40.02>
<CellID:id3><event:Src cell leave><timestamp:12.35.12.76>
<UE speed indication:0>
<Rmeasurem:1><type:RSSI><threshold value:6.55><timestamp:12.35.43.00>
   <CellID:id1>
   <CellID:id3>
   <CellID:id2>
   <CellID:id8><Blacklisted in Cellid:id2>
<Rmeasurem:2><type:RSSI><threshold value:6.55><timestamp:12.35.39.80>
   <CellID:id2>
   <CellID:id3>

It is proposed that an entry in the last visited cells list can be created for the following kind of events:
- UE leaves source cell / serving cell in normal way (e.g. triggered by reception of hand-over command).
- UE detects Radio Link Failure (failure after successful communication in a Cell).
- UE detects Access Failure (failure before communication link has been fully established)
- UE Accesses a cell (successfully) for re-establishment. The main reason for this kind of entry is mainly to provide a cross-correlation point for UE time reference, to be able to clearly correlate the timing between the events. Such events are here referred to as "mobility events".

A benefit of indicating HO explicitly, is that it would be easy to discriminate between failures in the interior of the cell and on the cell edge, i.e. soon after a HO.

The same discrimination could be done when it is observed that events occur in different cells within a short time window, regardless what the event is.

It is proposed that it shall be possible to report a radio measurement report with zero entries, if no cell is measured above a certain threshold (the UE could report what measurement type has been used and the threshold value).

This way it is easy for the UE to indicate situations when the UE is in a "real" coverage hole.

### EXAMPLE 2

No timestamps, just a time window (signalled explicitly in this example)
<Time window: 4000 ms>
<CellID:current><event:access><Blacklisted inCellID: id2>
<CellID:id1><event:AF><Reason: highload>
<CellID:id2><event:Src cell leave>
<CellID:id3><event:Src cell leave>

## Claims

1. Mobile terminal (2) for at least one cellular radio network having handover functionality, said mobile terminal (2) comprising a report function that is adapted to send, in case of a failure event in regard of a communication between said mobile terminal (2) and a radio base station (1) belonging to said at least one cellular radio network, a report containing at least information on said failure event to said at least one cellular radio network, **characterised in that** said report function is adapted to send said report such that said report contains:
- a history of any failure event backwards in time until at least one successful event in regard of a communication between said mobile terminal (2) and a radio base station (1) belonging to said at least one cellular radio network, said at least one successful event having happened before said any failure event; and
- said at least one successful event.

2. Mobile terminal (2) according to claim 1, wherein said at least one successful event occurred within a first geographical area in which the mobile terminal (2) has been present during a time window.

3. Mobile terminal (2) according to claim 2, wherein said report function is adapted to scale said time window in accordance with the speed of said mobile terminal (2).

4. Mobile terminal (2) according to claim 1, wherein said failure event is one event from said group consisting of: Access Failure, Radio Link Failure.

5. Mobile terminal (2) according to claim 1, wherein said successful event being any from a group consisting of: said mobile terminal (2) leaves a cell in a normal way after having been successfully connected to this cell, said mobile terminal (2) leaves a cell in a normal way after having been successfully camped on this cell, said mobile terminal (2) accesses a cell successfully for reestablishment, said mobile terminal (2) having maintained a communication link to a cell successfully.

6. Mobile terminal (2) according to claim 1, wherein said report function is adapted to provide, in said report, a list of possible target cells.

7. Mobile terminal (2) according to claim 6, wherein said report function is adapted to generate said list of possible target cells by applying a threshold value of a cell quality parameter, filtering out cells falling outside a range defined by said threshold value.

8. Mobile terminal (2) according to claim 7, wherein said report function is adapted to provide said list of possible target cells in order of value of said cell quality parameter.

9. Mobile terminal (2) according to claim 1, wherein said report function is adapted to report cell measurements on demand from said at least one cellular radio network.

10. Mobile terminal (2) according to claim 1, wherein said at least one successful event is a successful handover event.

11. Mobile terminal (2) according to claim 1, wherein said report is sent at reestablishment.

12. Mobile terminal (2) according to claim 1, wherein said at least one successful event occurred within a first geographical area in which the mobile terminal (2) has been present.

13. Mobile terminal (2) according to claim 1, wherein said report function is adapted to forward, via a network node in said at least one cellular radio network, said report to another network node.

14. Mobile terminal (2) according to claim 1, wherein said report function is adapted to forward, via a network node in said at least one cellular radio network, said report to another cellular radio network node.

15. Network entity (1) for at least one cellular radio network having handover functionality, said network entity comprising a report function that is adapted to receive a report coming from a mobile terminal (2), in case of a failure event in regard of a communication between said mobile terminal (2) and a radio base station (1) belonging to said at least one cellular radio network, said report containing at least information on said failure event, **characterised in that** said report function is adapted to receive said report wherein said report is of the type containing:
- a history of any failure event backward in time until at least one successful event in regard of a communication between said mobile terminal (2) and a radio base station (1) belonging to said at least one cellular radio network; and
- said at least one successful event.

16. Network entity according to claim 15, said at least one successful eventoccurred within a first geographical area in which the mobile terminal (2) has been present.

17. Network entity according to claim 15, wherein said report function is adapted to request additional event information, beyond what is reported by the mobile terminal (2), from another Network Entity that is identified from the history reported by the Mobile terminal (2), wherein said additional event information contains at least one of:
- a further history of failure events and successful events, having occurred within a second geographical area in which the mobile terminal (2) has been present,
- radio measurements reported by the mobile terminal (2), in another cell, having occurred within said second geographical area.

18. Network entity according to claim 15, wherein said report function is adapted to estimate from said report at least one Performance Measurement Counter indicating a measure of performance of said at least one cellular radio network.

19. A cellular radio network, comprising a mobile terminal (2) and a network entity (1) in communication with each other, wherein the network has handover functionality, wherein the mobile terminal (2) is configured to perform all the method steps of the mobile terminal (2) in any one of claims 1 to 14, and the network entity is configured to perform all the method steps of the network entity in any one of claims 15 to 18.

20. Method of information management in at least one cellular radio network, said at least one cellular radio network having handover functionality, the method comprising the steps:
a) sending from a mobile terminal (2) for said at least one cellular radio network, in case of a failure event in regard of a communication between said mobile terminal (2) and a radio base station (1) belonging to said at least one cellular radio network, a report containing at least information on said failure event to said at least one cellular radio network,
b) receiving in a network entity, for said at least one cellular radio network having handover functionality, said report coming from said mobile terminal (2),
**characterised in that** in step a): sending, from a mobile terminal (2), said report such that said report contains a history of any failure event backward in time until at least one successful event in regard of a communication between said mobile terminal (2) and a radio base station (1) belonging to said at least one cellular radio network; and
said at least one successful event.

21. Method of information management according to claim 20, further comprising:
c) the network entity optionally requesting additional information from another network entity, said additional information coming from earlier reports from said mobile terminal (2) and earlier registered events relating to said mobile terminal (2),
d) maintaining at least one Performance Measurement Counter that is incremented based on criteria derived from the information received in step b and optionally step c.

22. Method of information management according to claim 21 wherein said step d) involves that said at least one Performance Measurement Counter is incremented based on criteria of a Radio Link Failure occurring in one cell, and successful reestablishment being done in another cell, within the same geographical area, the Performance Measurement Counter being applicable to the pair of said one cell and said another cell.

23. A microprocessor in a mobile terminal(2), comprising a report function that is adapted to send, in case of a failure event in regard of a communication between the mobile terminal (2) and a radio base station(1) belonging to a cellular radio network, a report containing at least information on said failure event to said cellular radio network, **characterised in that** said report function is adapted to send said report such that said report contains:
- a history of any failure event backwards in time until at least one successful event in regard of a communication between said mobile terminal(2) and a radio base station(1) belonging to said cellular radio network, said at least one successful event having happened before said any failure event; and
said at least one successful event.

## Patentansprüche

1. Mobiles Endgerät (2) für mindestens ein zellulares Funknetzwerk, das Übergabe-Funktionalität aufweist, wobei das mobile Endgerät (2) eine Berichtsfunktion umfasst, die angepasst ist, um im Fall eines Ausfallereignisses in Bezug auf eine Kommunikation zwischen dem mobilen Endgerät (2) und einer Funkbasisstation (1), die zu dem mindestens einen zellularen Funknetzwerk gehört, einen Bericht, der mindestens Informationen über das Ausfallereignis enthält, an das mindestens eine zellulare Funknetzwerk zu senden, **dadurch gekennzeichnet, dass** die Berichtsfunktion angepasst ist, um den Bericht so zu senden, dass der Bericht Folgendes enthält:
- eine Vorgeschichte eines etwaigen Ausfallereignisses rückwärts in der Zeit bis zu mindestens einem erfolgreichen Ereignis in Bezug auf eine Kommunikation zwischen dem mobilen Endgerät (2) und einer Funkbasisstation (1), die zu dem mindestens einen zellularen Funknetzwerk gehört, wobei das mindestens eine erfolgreiche Ereignis vor dem etwaigen Ausfallereignis vorgekommen ist; und
- das mindestens eine erfolgreiche Ereignis.

2. Mobiles Endgerät (2) nach Anspruch 1, wobei das mindestens eine erfolgreiche Ereignis innerhalb eines ersten geografischen Bereichs, in dem das mobile Endgerät (2) während eines Zeitfensters vorhanden war, vorkam.

3. Mobiles Endgerät (2) nach Anspruch 2, wobei die Berichtsfunktion angepasst ist, um das Zeitfenster in Übereinstimmung mit der Geschwindigkeit des mobilen Endgeräts (2) zu skalieren.

4. Mobiles Endgerät (2) nach Anspruch 1, wobei das Ausfallereignis ein Ereignis aus der Gruppe ist, bestehend aus: Zugangsausfall, Funkverbindungsausfall.

5. Mobiles Endgerät (2) nach Anspruch 1, wobei das erfolgreiche Ereignis ein beliebiges aus der Gruppe ist, bestehend aus: das mobile Endgerät (2) verlässt eine Zelle in einer normalen Weise, nachdem es erfolgreich mit dieser Zelle verbunden wurde, das mobile Endgerät (2) verlässt eine Zelle in einer normalen Weise, nachdem es erfolgreich auf diese Zelle gewartet hat, das mobile Endgerät (2) greift erfolgreich auf eine Zelle für Wiederherstellung zu, das mobile Endgerät (2) hat eine Kommunikationsverbindung zu einer Zelle erfolgreich aufrechterhalten.

6. Mobiles Endgerät (2) nach Anspruch 1, wobei die Berichtsfunktion angepasst ist, um in dem Bericht eine Liste möglicher Zielzellen bereitzustellen.

7. Mobiles Endgerät (2) nach Anspruch 6, wobei die Berichtsfunktion angepasst ist, um die Liste möglicher Zielzellen durch Anwenden eines Schwellenwerts eines Zellenqualitätsparameters zu erzeugen, wobei Zellen herausgefiltert werden, die aus einem durch den Schwellenwert definierten Bereich fallen.

8. Mobiles Endgerät (2) nach Anspruch 7, wobei die Berichtsfunktion angepasst ist, um die Liste möglicher Zielzellen in der Reihenfolge des Werts des Zellenqualitätsparameters bereitzustellen.

9. Mobiles Endgerät (2) nach Anspruch 1, wobei die Berichtsfunktion angepasst ist, um Zellenmessungen auf Anforderung von dem mindestens einen zellularen Funknetzwerk zu berichten.

10. Mobiles Endgerät (2) nach Anspruch 1, wobei das mindestens eine erfolgreiche Ereignis ein erfolgreiches Übergabeereignis ist.

11. Mobiles Endgerät (2) nach Anspruch 1, wobei der Bericht bei Wiederherstellung gesandt wird.

12. Mobiles Endgerät (2) nach Anspruch 1, wobei das mindestens eine erfolgreiche Ereignis in einem ersten geografischen Bereich, in dem das mobile Endgerät (2) vorhanden war, vorkam.

13. Mobiles Endgerät (2) nach Anspruch 1, wobei die Berichtsfunktion angepasst ist, um den Bericht über einen Netzwerkknoten in dem mindestens einen zellularen Funknetzwerk an einen anderen Netzwerkknoten weiterzuleiten.

14. Mobiles Endgerät (2) nach Anspruch 1, wobei die Berichtsfunktion angepasst ist, um den Bericht über einen Netzwerkknoten in dem mindestens einen zellularen Funknetzwerk an einen anderen zellularen Netzwerkknoten weiterzuleiten.

15. Netzwerkinstanz (1) für mindestens ein zellulares Funknetzwerk, das Übergabe-Funktionalität aufweist, wobei die Netzwerkinstanz eine Berichtsfunktion umfasst, die angepasst ist, um einen Bericht, der von einem mobilen Endgerät (2) kommt, im Fall eines Ausfallereignisses in Bezug auf eine Kommunikation zwischen dem mobilen Endgerät (2) und einer Funkbasisstation (1), die zu dem mindestens einen zellularen Funknetzwerk gehört, zu empfangen, wobei der Bericht mindestens Informationen über das Ausfallereignis enthält, **dadurch gekennzeichnet, dass** die Berichtsfunktion angepasst ist, um den Bericht zu empfangen, wobei der Bericht zu dem Typ gehört, der Folgendes enthält:
- eine Vorgeschichte eines etwaigen Ausfallereignisses rückwärts in der Zeit bis zu mindestens einem erfolgreichen Ereignis in Bezug auf eine Kommunikation zwischen dem mobilen Endgerät (2) und einer Funkbasisstation (1), die zu dem mindestens einen zellularen Funknetzwerk gehört; und
- das mindestens eine erfolgreiche Ereignis.

16. Netzwerkinstanz nach Anspruch 15, wobei das mindestens eine erfolgreiche Ereignis innerhalb eines ersten geografischen Bereichs, in dem das mobile Endgerät (2) vorhanden war, vorkam.

17. Netzwerkinstanz nach Anspruch 15, wobei die Berichtsfunktion angepasst ist, um zusätzliche Ereignisinformationen über das hinaus, was von dem mobilen Endgerät (2) berichtet wird, von einer anderen Netzwerkinstanz, die aus der von dem mobilen Endgerät (2) berichteten Vorgeschichte identifiziert wird, anzufordern, wobei die zusätzlichen Ereignisinformationen mindestens eines von Folgendem enthalten:
- eine weitere Vorgeschichte von Ausfallereignissen und erfolgreichen Ereignissen, die innerhalb eines zweiten geografischen Bereichs, in dem das mobile Endgerät (2) vorhanden war, vorgekommen sind,
- von dem mobilen Endgerät (2) berichtete Funkmessungen in einer anderen Zelle, die innerhalb des zweiten geografischen Bereichs vorgekommen sind.

18. Netzwerkinstanz nach Anspruch 15, wobei die Berichtsfunktion angepasst ist, um aus dem Bericht mindestens einen Leistungsmessungszähler, der eine Messung der Leistung des mindestens einen zellularen Funknetzwerks anzeigt, zu schätzen.

19. Zellulares Funknetzwerk, umfassend ein mobiles Endgerät (2) und eine Netzwerkinstanz (1) in Kommunikation miteinander, wobei das Netzwerk Übergabe-Funktionalität aufweist, wobei das mobile Endgerät (2) konfiguriert ist, um sämtliche der Verfahrensschritte des mobilen Endgeräts (2) in einem beliebigen der Ansprüche 1 bis 14 durchzuführen, und die Netzwerkinstanz konfiguriert ist, um sämtliche der Verfahrensschritte der Netzwerkinstanz in einem beliebigen der Ansprüche 15 bis 18 durchzuführen.

20. Verfahren zur Informationsverwaltung in mindestens einem zellularen Funknetzwerk, wobei das mindestens eine zellulare Funknetzwerk Übergabe-Funktionalität aufweist, das Verfahren die folgenden Schritte umfassend:
a) Senden, von einem mobilen Endgerät (2), für das mindestens eine zellulare Funknetzwerk im Fall eines Ausfallereignisses in Bezug auf eine Kommunikation zwischen dem mobilen Endgerät (2) und einer Funkbasisstation (1), die zu dem mindestens einen zellularen Funknetzwerk gehört, eines Berichts, der mindestens Informationen über das Ausfallereignis enthält, an das mindestens eine zellulare Funknetzwerk,
b) Empfangen, in einer Netzwerkinstanz, für das mindestens eine zellulare Funknetzwerk, das Übergabe-Funktionalität aufweist, des Berichts, der von dem mobilen Endgerät (2) kommt,
**dadurch gekennzeichnet, dass** in Schritt a): Senden, von einem mobilen Endgerät (2), des Berichts derart, dass der Bericht eine Vorgeschichte eines etwaigen Ausfallereignisses zurück in der Zeit bis zu mindestens einem erfolgreichen Ereignis in Bezug auf eine Kommunikation zwischen dem mobilen Endgerät (2) und einer Funkbasisstation (1), die zu dem mindestens einen zellularen Funknetzwerk gehört, enthält; und
das mindestens eine erfolgreiche Ereignis.

21. Verfahren zur Informationsverwaltung nach Anspruch 20, weiter umfassend:
c) wahlweises Anfordern, durch die Netzwerkinstanz, zusätzlicher Informationen von einer anderen Netzwerkinstanz, wobei die zusätzlichen Informationen aus früheren Berichten von dem mobilen Endgerät (2) und früher registrierten Ereignissen, die zu dem mobilen Endgerät (2) in Beziehung stehen, kommen,
d) Führen mindestens eines Leistungsmessungszählers, der basierend auf Kriterien, die aus den in Schritt b und wahlweise Schritt c empfangenen Informationen abgeleitet werden, inkrementiert wird.

22. Verfahren zur Informationsverwaltung nach Anspruch 21, wobei der Schritt d) involviert, dass der mindestens eine Leistungsmessungszähler basierend auf Kriterien eines Funkverbindungsausfalls, der in einer Zelle vorkommt, und erfolgreicher Wiederherstellung, die in einer anderen Zelle innerhalb des gleichen geografischen Bereichs erfolgt, inkrementiert wird, wobei der Leistungsmessungszähler auf das Paar der einen Zelle und der anderen Zelle anwendbar ist.

23. Mikroprozessor in einem mobilen Endgerät (2), umfassend eine Berichtsfunktion, die angepasst ist, um im Fall eines Ausfallereignisses in Bezug auf eine Kommunikation zwischen dem mobilen Endgerät (2) und einer Funkbasisstation (1), die zu einem zellularen Funknetzwerk gehört, einen Bericht, der mindestens Informationen über das Ausfallereignis enthält, an das zellulare Funknetzwerk zu senden, **dadurch gekennzeichnet, dass** die Berichtsfunktion angepasst ist, um den Bericht derart zu senden, dass der Bericht Folgendes enthält:
- eine Vorgeschichte eines etwaigen Ausfallereignisses rückwärts in der Zeit bis zu mindestens einem erfolgreichen Ereignis in Bezug auf eine Kommunikation zwischen dem mobilen Endgerät (2) und einer Funkbasisstation (1), die zu dem zellularen Funknetzwerk gehört, wobei das mindestens eine erfolgreiche Ereignis vor dem etwaigen Ausfallereignis vorgekommen ist; und
das mindestens eine erfolgreiche Ereignis.

## Revendications

1. Terminal mobile (2) pour au moins un réseau radio cellulaire ayant une fonctionnalité de transfert, ledit terminal mobile (2) comprenant une fonction de rapport qui est conçue pour envoyer, en cas d'événement de panne relatif à une communication entre ledit terminal mobile (2) et une station de base radio (1) appartenant audit au moins un réseau radio cellulaire, un rapport contenant au moins des informations sur ledit événement de panne audit au moins un réseau radio cellulaire, **caractérisé en ce que** ladite fonction de rapport est conçue pour envoyer ledit rapport de manière à ce que ledit rapport contienne :
un historique de tout événement de panne antérieur jusqu'à au moins un événement réussi relativement à une communication entre ledit terminal mobile (2) et une station de base radio (1) appartenant audit au moins un réseau radio cellulaire, ledit au moins un événement réussi étant survenu avant ledit événement de panne ; et
ledit au moins un événement réussi.

2. Terminal mobile (2) selon la revendication 1, dans lequel ledit au moins un événement réussi est survenu dans une première zone géographique dans laquelle le terminal mobile (2) a été présent au cours d'une fenêtre de temps.

3. Terminal mobile (2) selon la revendication 2, dans lequel ladite fonction de rapport est conçue pour dimensionner ladite fenêtre de temps en fonction de la vitesse dudit terminal mobile (2).

4. Terminal mobile (2) selon la revendication 1, dans lequel ledit événement de panne est un événement parmi ledit groupe constitué des événements suivants : une panne d'accès, une panne de liaison radio.

5. Terminal mobile (2) selon la revendication 1, dans lequel ledit événement réussi est un événement quelconque parmi un groupe constitué des événements suivants : ledit terminal mobile (2) quitte une cellule d'une manière normale après avoir été connecté avec succès à cette cellule, ledit terminal mobile (2) quitte une cellule de manière normale après être resté avec succès sur cette cellule, ledit terminal mobile (2) accède à une cellule avec succès pour un rétablissement, ledit terminal mobile (2) ayant maintenu avec succès une liaison de communication avec une cellule.

6. Terminal mobile (2) selon la revendication 1, dans lequel ladite fonction de rapport est conçue pour fournir, dans ledit rapport, une liste de cellules cibles possibles.

7. Terminal mobile (2) selon la revendication 6, dans lequel ladite fonction de rapport est conçue pour générer ladite liste de cellules cibles possibles en appliquant une valeur seuil d'un paramètre de qualité de cellule, filtrant les cellules sortant d'une plage définie par ladite valeur seuil.

8. Terminal mobile (2) selon la revendication 7, dans lequel ladite fonction de rapport est conçue pour fournir ladite liste de cellules cibles possibles dans l'ordre des valeurs dudit paramètre de qualité de cellule.

9. Terminal mobile (2) selon la revendication 1, dans lequel ladite fonction de rapport est conçue pour faire des rapports de mesures de cellule à la demande à partir dudit au moins un réseau radio cellulaire.

10. Terminal mobile (2) selon la revendication 1, dans lequel ledit au moins un événement réussi est un événement de transfert réussi.

11. Terminal mobile (2) selon la revendication 1, dans lequel ledit rapport est envoyé au rétablissement.

12. Terminal mobile (2) selon la revendication 1, dans lequel ledit au moins un événement réussi est survenu dans une première zone géographique dans laquelle le terminal mobile (2) a été présent.

13. Terminal mobile (2) selon la revendication 1, dans lequel ladite fonction de rapport est conçue pour transmettre, par l'intermédiaire d'un noeud de réseau dans ledit au moins un réseau radio cellulaire, ledit rapport à un autre noeud de réseau.

14. Terminal mobile (2) selon la revendication 1, dans lequel ladite fonction de rapport est conçue pour transmettre, par l'intermédiaire d'un noeud de réseau dans ledit au moins un réseau radio cellulaire, ledit rapport à un autre noeud de réseau radio cellulaire.

15. Entité de réseau (1) pour au moins un réseau radio cellulaire ayant une fonctionnalité de transfert, ladite entité de réseau comprenant une fonction de rapport qui est conçue pour recevoir un rapport provenant d'un terminal mobile (2), en cas d'événement de panne relatif à une communication entre ledit terminal mobile (2) et une station de base radio (1) appartenant audit au moins un réseau radio cellulaire, ledit rapport contenant au moins des informations sur ledit événement de panne, **caractérisé en ce que** ladite fonction de rapport est conçue pour recevoir ledit rapport, où ledit rapport est du type contenant :
un historique de tout événement de panne antérieur jusqu'à au moins un événement réussi relativement à une communication entre ledit terminal mobile (2) et une station de base radio (1) appartenant audit au moins un réseau radio cellulaire ; et
ledit au moins un événement réussi.

16. Entité de réseau selon la revendication 15, dans laquelle ledit au moins un événement réussi est survenu dans une première zone géographique dans laquelle le terminal mobile (2) a été présent.

17. Entité de réseau selon la revendication 15, dans laquelle ladite fonction de rapport est conçue pour demander des informations d'événement supplémentaires, en plus de ce qui est rapporté par le terminal mobile (2), auprès d'une autre entité de réseau qui est identifiée à partir de l'historique rapporté par le terminal mobile (2), où lesdites informations d'événement supplémentaires contiennent au moins l'un parmi :
un autre historique d'événements de pannes et d'événements réussis étant survenus dans une seconde zone géographique dans laquelle le terminal mobile (2) a été présent,
des mesures radio rapportées par le terminal mobile (2), dans une autre cellule, étant survenues dans ladite seconde zone géographique.

18. Entité de réseau selon la revendication 15, dans laquelle ladite fonction de rapport est conçue pour estimer à partir dudit rapport au moins un compteur de mesure des performances indiquant une mesure des performances dudit au moins un réseau radio cellulaire.

19. Réseau radio cellulaire, comprenant un terminal mobile (2) et une entité de réseau (1) en communication l'un avec l'autre, où le réseau a une fonctionnalité de transfert, où le terminal mobile (2) est configuré pour exécuter toutes les étapes de procédé du terminal mobile (2) dans l'une quelconque des revendications 1 à 14, et l'entité de réseau est configurée pour exécuter toutes les étapes de procédé de l'entité de réseau dans l'une quelconque des revendications 15 à 18.

20. Procédé de gestion d'informations dans au moins un réseau radio cellulaire, ledit au moins un réseau radio cellulaire ayant une fonctionnalité de transfert, le procédé comprenant les étapes suivantes :
a) envoyer, depuis un terminal mobile (2) pour ledit au moins un réseau radio cellulaire, en cas d'événement de panne relatif à une communication entre ledit terminal mobile (2) et une station de base radio (1) appartenant audit au moins un réseau radio cellulaire, un rapport contenant au moins des informations sur ledit événement de panne audit au moins un réseau radio cellulaire,
b) recevoir dans une entité de réseau, pour ledit au moins un réseau radio cellulaire ayant une fonctionnalité de transfert, ledit rapport provenant dudit terminal mobile (2),
**caractérisé en ce que**, à l'étape a), le procédé comprend l'envoi, depuis un terminal mobile (2), dudit rapport de manière à ce que ledit rapport contienne un historique de tout événement de panne antérieur jusqu'à au moins un événement réussi relativement à une communication entre ledit terminal mobile (2) et une station de base radio (1) appartenant audit au moins un réseau radio cellulaire ; et
ledit au moins un événement réussi.

21. Procédé de gestion d'informations selon la revendication 20, comprenant en outre :
c) l'entité de réseau demandant optionnellement des informations supplémentaires d'une autre entité de réseau, lesdites informations supplémentaires provenant de rapports antérieurs dudit terminal mobile (2) et d'événements enregistrés antérieurs concernant ledit terminal mobile (2),
d) de maintenir au moins un compteur de mesure des performances qui est incrémenté sur la base de critères provenant des informations reçues à l'étape b) et optionnellement à l'étape c).

22. Procédé de gestion d'informations selon la revendication 21, dans lequel ladite étape d) implique que ledit au moins un compteur de mesure des performances soit incrémenté sur la base de critères d'une panne de liaison radio survenant dans une cellule, et un rétablissement réussi étant effectué dans une autre cellule, dans la même zone géographique, le compteur de mesure des performances étant applicable à la paire de ladite une cellule et de ladite autre cellule.

23. Microprocesseur dans un terminal mobile (2), comprenant une fonction de rapport qui est conçue pour envoyer, en cas d'événement de panne relatif à une communication entre ledit terminal mobile (2) et une station de base radio (1) appartenant à un réseau radio cellulaire, un rapport contenant au moins des informations sur ledit événement de panne audit réseau radio cellulaire, **caractérisé en ce que** ladite fonction de rapport est conçue pour envoyer ledit rapport de manière à ce que ledit rapport contienne :
un historique de tout événement de panne antérieur jusqu'à au moins un événement réussi relativement à une communication entre ledit terminal mobile (2) et une station de base radio (1) appartenant audit réseau radio cellulaire, ledit au moins un événement réussi étant survenu avant ledit événement de panne ; et
ledit au moins un événement réussi.
